Europäisches Patentamt

European Patent Office

Office européen des brevets

(11) Veröffentlichungsnummer: **0 320 953**

**A2**

## (12) EUROPÄISCHE PATENTANMELDUNG

(21) Anmeldenummer: 88121041.3

(22) Anmeldetag: 15.12.88

(51) Int. Cl.⁴: **F16B 19/10**

(30) Priorität: 17.12.87 DE 3742884

(43) Veröffentlichungstag der Anmeldung:
21.06.89 Patentblatt 89/25

(84) Benannte Vertragsstaaten:
**DE FR GB IT SE**

(71) Anmelder: **Böllhoff & Co, GmbH & Co KG
Archimedesstrasse 1-4
D-4800 Bielefeld 14(DE)**

(72) Erfinder: **Frauenheim, Josef
Am Zuckerhut 6
D-4504 Georgsmarienhütte(DE)**

(74) Vertreter: **Hauck, Hans, Dipl.Ing.
Patentanwälte Dipl.-Ing. H. Hauck et al
Dipl.-Ing. E. Graalfs Dipl.-Ing. W. Wehnert
Dr.-Ing. W. Döring
Mozartstrasse 23 D-8000 München 2(DE)**

(54) **Buchse.**

(57) Die Befestigung einer Buchse in Kunststoff erfolgt durch einen Reibeingriff, der nach dem Einsetzen der Buchse in eine Aufnahmebohrung des Kunststoffs durch Stauchen oder ballige Verformung mittels eines Zugdorns hervorgerufen wird. Auf diese Weise läßt sich eine Buchse mit hoher Verdrehfestigkiet in Kunststoff verankern.

FIG.1

## Buchse

Die Erfindung betrifft eine Buchse zur Aufnahme eines gewindeten oder klemmenden Teils sowie zur Befestigung in einem aus Kunststoff bestehenden Bauteil gemäß dem Oberbegriff des Patentanspruchs 1.

Zur Befestigung derartiger Buchsen ist es bekannt, die Bohrung zur Aufnahme der Schraube oder des Steckteiles als Sackbohrung auszubilden und die Buchse mit ihrem geschlossenen Ende anzuschweißen. Solche Buchsen dienen beispielsweise zum Befestigen von Schlauchleitungen oder elektrischen Leitungen, insbesondere im Kraftfahrzeugbereich. So lassen sich mit derartigen Buchsen Klemmbrücken befestigen, welche zum Halten der Leitungen dienen.

Wird im Zuge der Gewichtsersparnis Stahlblech durch Kunststoffplatten ersetzt, so muß für die Befestigung eine andere Möglichkeit gesucht werden.

Die der Erfindung zugrundeliegende Aufgabe besteht darin, die Buchsen der eingangs geschilderten Art auf einfache Weise in Kunststoffmaterial zuverlässig zu befestigen.

Die genannte Aufgabe ist durch die Merkmale im kennzeichnenden Teil des Patentanspruchs 1 gelöst.

Erfindungsgemäß wird zur Befestigung der Buchse vom Prinzip einer Blindnietverbindung Gebrauch gemacht, die sich eines Zugdorns bedient, durch den eine an der Buchse angeformte, in eine Aufnahmebohrung des Kunststoffs eingesetzte Verlängerung gestaucht und derart ballig verformt wird, daß die Buchse verdrehfest im Kunststoff eingebettet wird. Die auf diese Weise erzielte Verdrehfestigkeit der im Kunststoff, insbesondere einer mehrlagigen Sandwich-Kunststoffplatte verankerten Buchse ist so groß, daß eine ihr Gewinde selbstformende Schraube in die Buchse eingedreht werden kann.

Vorteilhafte Weiterbildungen der Erfindung sind in den Unteransprüche gekennzeichnet.

Ein Ausführungsbeispiel ist anhand der Zeichnung nachstehend näher erläutert. Es zeigt:

Figur 1 einen Schnitt durch die Buchse vor dem Einbau und

Figur 2 einen Schnitt durch die Buchse nach dem erfolgten Einbau.

Eine Buchse 1 aus Metall, insbesondere Aluminium, weist eine Bohrung 2 zur Aufnahme einer Schraube oder eines Steckteils auf. An der zylindrischen Buchse 1 ist ein Flansch 3 angeformt, mit dem die Buchse auf ein Bauteil aufzusetzen ist. Ferner ist an der Buchse 1 eine hülsenförmige Verlängerung 4 angeformt, die mit einer Bohrung 5 versehen ist, die zur Aufnahme eines Zugdorns 6 dient, dessen Kopf 7 sich auf dem Ende der Verlängerung 4 abstützt. Im Bereich der Bohrung 5 weist der Zugdorn eine Sollbruchstelle in Form einer Kerbe 8 auf. Der Durchmesser der Aufnahmebohrung 2 ist wesentlich größer als der Durchmesser der Bohrung 5 für den Zugdorn.

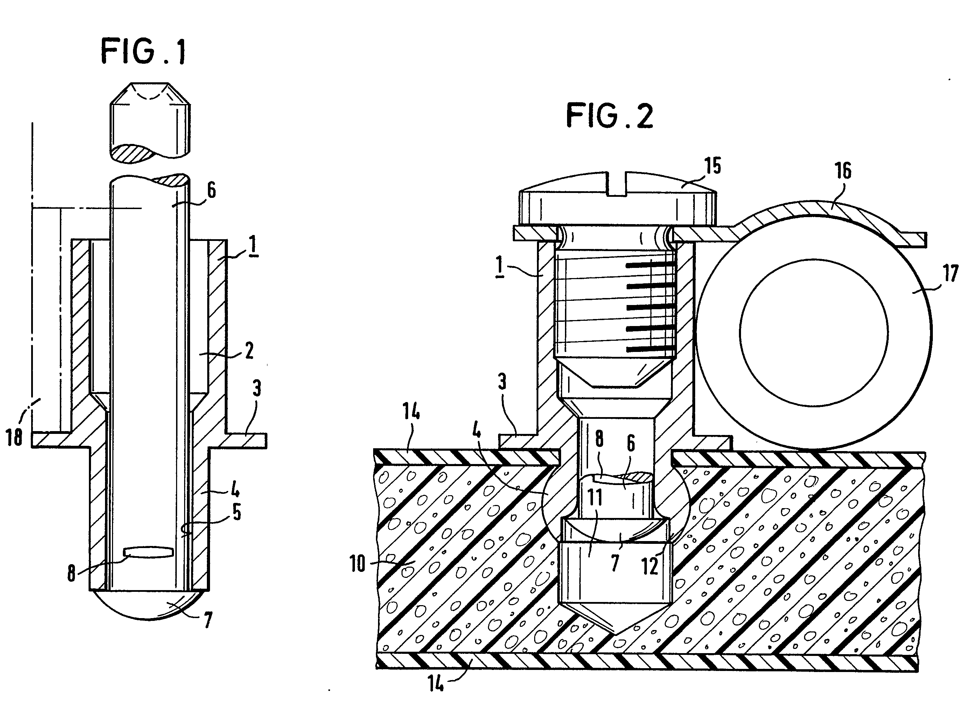

Aus Figur 2 geht hervor, daß zur Aufnahme der Verlängerung 4 in dem Kunststoffmaterial 10 eine Bohrung 11 vorgesehen ist, deren Durchmesser ein leichtes Übermaß gegenüber dem Außendurchmesser der Verlängerung 4 aufweist, so daß die Verlängerung 4 ohne Schwierigkeiten in die Bohrung 11 eingesetzt werden kann. Anschließend wird durch ein nichtdargestelltes Werkzeug der Zugdorn 6 außerhalb der Buchse 1 erfaßt und angezogen, wobei das Mundstück 18 sich auf den Flansch abstützt und ein bestimmter Hub zurückgelegt wird. Dabei verformt sich die hülsenförmige Verlängerung 4 in der in Figur 2 dargestellten Weise. Die Verlängerung 4 wird gestaucht, wobei das Material radial verdrängt wird und sich die Verlängerung ballig verformt, wobei der Kopf 7 durch den starken Zug teilweise in die Verlängerung eintritt, so daß sich außerhalb des Kopfes 7 ein Ring 12 ergibt, der Teil der balligen Umformung der Verlängerung 4 ist. Auf diese Weise preßt sich das ballige Ende fest in Reibeingriff mit dem umgebenden Kunststoffmaterial 10. Außerdem ergibt sich durch das Stauchen der Verlängerung eine axiale Klemmwirkung zwischen dem Flansch 3 der Buchse und der ballig umgeformten Verlängerung im Bereich der das innere Kunststoffmaterial 10 abschließenden Deckplatte 14. Dabei handelt es sich um ein sogenanntes mehrlagiges Kunststoff-Sandwich, bei dem der Zwischenraum zwischen zwei verhältnismäßig dünnen aber harten Deckplatten 14 von einem verhältnismäßig spröden porösen geschäumten Kunststoffmaterial geringerer Festigkeit ausgefüllt ist.

Ist der Querschnitt des Zugdorns oberhalb des Kopfes 7 unrund, z.B. beidseitig abgeplattet, wird erreicht, daß die Niethülse bei der balligen Verformung einen ovalen Querschnitt aufweist und durch die damit erreichte unsymmetrische Lochlaibung eine stärkere Verdrehfestigkeit gesichert ist.

Nach Überschreiten einer bestimmten Zugkraft bricht der Zugdorn 6 an der Kerbe 8 ab. Die Kerbe ist außerhalb der Bohrung 2 vorgesehen, so daß anschließend eine selbstformende Schraube 15 in die Buchse 1 eindrehbar ist. Wie in Figur 2 dargestellt, hält diese Schraube 15 beispielsweise eine Klemmbrücke 16 zur Befestigung einer Leitung 17.

**Ansprüche**

1. Buchse zur Aufnahme eines gewindeten oder klemmenden Teils sowie zur Befestigung in einem aus Kunststoff bestehenden Bauteil, dadurch **gekennzeichnet,** daß die Buchse (1) eine hülsenförmige Verlängerung (4) aufweist, in der ein Zugdorn (6) einsetzbar ist, dessen Außendurchmesser kleiner als der Innendurchmesser der Buchse ist und dessen Kopf (7) am Ende der Verlängerung abgestützt ist und daß die Verlängerung nach Einsetzen in eine Bohrung des Bauteils in Reibeingriff mit dem Bauteil ballig verformbar ist.

2. Buchse nach Anspruch 1, dadurch **gekennzeichnet,** daß der Zugdorn (6) eine Sollbruchstelle aufweist, die außerhalb des Einbauraumes des gewindeten oder klemmenden Teils in der Buchse ist.

3. Buchse nach Anspruch 2, dadurch **gekennzeichnet,** daß die Sollbruchstelle innerhalb der Verlängerung (4) liegt.

4. Buchse nach einem der Ansprüche 1 bis 3, dadurch **gekennzeichnet,** daß der Zugdorn zwischen Kopf und Sollbruchstelle einen vom kreisrunden Querschnitt abweichenden Querschnitt aufweist.

5. Buchse nach Anspruch 4, dadurch **gekennzeichnet,** daß der Zugdorn auf zwei gegenüberliegenden Stellen abgeplattet ist.

6. Buchse nach einem der Ansprüche 1 bis 3, dadurch **gekennzeichnet,** daß zwischen der Buchse und der Verlängerung ein Flansch (3) angeformt ist.

7. Buchse nach einem der Ansprüche 1 bis 4, dadurch **gekennzeichnet,** daß die Verlängerung auf der Außenseite axiale Nuten, eine Rändelung oder Kreuzkordel zur Erhöhung der Verdrehfestigkeit aufweist.

8. Buchse nach einem der Ansprüche 1 bis 5, dadurch **gekennzeichnet,** daß die Buchse mit einer Bohrung (2) zum Befestigen eines ihr Gewinde selbstformenden Schraube versehen ist.

9. Buchse zum Einbau in ein mehrlagiges Sandwichbauteil aus Kunststoff, bei dem zwischen zwei harten Deckplatten geringer Wandstärke ein Kunststoffüllwerkstoff eingeschlossen ist.

# FIG.1

6

1

2

3

18

4

5

8

7

# FIG.2

15

16

1

17

3

14

4

8 6

11

10

7 12

14

Neu eingereicht / Newly filed
Nouvellement déposé

EP 0 320 953 A2